# EUROPÄISCHE PATENTSCHRIFT

(11) **EP 0 909 693 B1**
(45) Veröffentlichungstag und Bekanntmachung des Hinweises auf die Patenterteilung: **09.01.2008**
(21) Anmeldenummer: 98119292.5
(22) Anmeldetag: 13.10.1998
(51) Int. Cl.: B62D 7/18

(54) **Achsschenkel**
Steering knuckle
Fusée d'essieu

(30) Priorität: 18.10.1997 DE 29718557 U
(43) Veröffentlichungstag der Anmeldung: 21.04.1999
(73) Patentinhaber: BENTELER AG, D-33104 Paderborn (DE)
(72) Erfinder: Olszewski, Egon Dipl.-Ing., 33106 Paderborn (DE); Rose, Leonhard Dipl.-Ing., 33178 Borchen/Alfen (DE); Streubel, Wolfgang Dipl.-Ing., 32756 Detmold (DE)
(74) Vertreter: Ksoll, Peter

(56) Entgegenhaltungen:
- EP-A- 0 739 762
- EP-A- 0 790 170
- DE-C- 19 501 508
- US-A- 4 842 296
- US-A- 4 941 677
- PATENT ABSTRACTS OF JAPAN vol. 012, no. 040 (C-474), 5. Februar 1988 & JP 62 188739 A (HONDA MOTOR CO LTD), 18. August 1987

## Beschreibung

Die Erfindung betrifft einen Achsschenkel aus Aluminium oder einer Aluminiumlegierung für die Radaufhängung an einer Kraftfahrzeugvorderachse.

Die Radaufhängung der Vorderachse muss neben der senkrechten Bewegung zum Ein- und Ausfedern auch eine Schwenkbewegung der beiden Räder zum Lenken eines Fahrzeugs zulassen. Die Schwenkbewegung des Rads wird durch den Achsschenkel ermöglicht. Häufig wird der Achsschenkel daher auch als Schwenklager bezeichnet.

Neben der Übertragung der Lenkbewegung auf das Rad muss der Achsschenkel die am Rad angreifenden Kräfte und Momente aufnehmen und diese an die Querlenker sowie die Spurstange weiterleiten.

Achsschenkel unterliegen hohen Anforderungen hinsichtlich ihres Festigkeits- und Belastungsverhaltens. Da sie teilweise extremen statischen und dynamischen Betriebslasten ausgesetzt sind, müssen sie hohe Sicherheitsstandards erfüllen. Bislang werden die Achsschenkel als Stahlgussbauteile bzw. Stahlschmiedeteile ausgeführt. Hieraus resultiert ein bauteilspezifisch hohes Gewicht. Dies trägt zu einem höheren Gesamtgewicht eines Kraftfahrzeugs bzw. einer Erhöhung der ungefederten Massen bei und wirkt sich nachteilig auf die fahrdynamischen Eigenschaften aus.

Unter Wirtschaftlichkeits- und Umweltgesichtspunkten ist man in der Automobilbauindustrie grundsätzlich bestrebt, die Kraftfahrzeuge leichter zu bauen. Durch eine Gewichtsreduktion ist eine Verringerung des Materialbedarfs, des Kraftstoffverbrauchs und der Schadstoffemission möglich.

Aus der deutschen Patentschrift 195 01 508 geht ein Bauteil für das Fahrwerk eines Kraftfahrzeuges hervor. Das Bauteil ist einteilig aus Aluminium hergestellt und weist eine Radlageraufnahme auf, die mit einer Durchgangsbohrung versehen ist. An der Radlageraufnahme sind weiterhin Anschlüsse für einen Führungslenker und einen Traglenker vorgesehen. An die Radlageraufnahme schließt sich ein Schenkelhals an, der endseitig Anschlüsse für einen Querlenker aufweist. Weiterhin ist ein Anschluss für einen Lenkspurhebel mit einem entsprechenden Anschluss stirnseitig an den Schenkelhals angeformt.

Die europäische Patentanmeldung 0 790 170 zeigt einen Achsschenkel auf, bei dem ein Stahlzapfen durch eine Durchgangsbohrung einer Radlageraufnahme gepresst und mit dem Achsschenkel verspannbar ist. Der Achsschenkel kann aus geschmiedetem Aluminium hergestellt sein.

Die europäische Patentanmeldung 0 739 762 betrifft einen Arm, bei dem die Anbindung des Bremssattels an den Achsschenkel über eine stegförmige Anformung erfolgt und der Hals massiv ausgebildet ist.

Der Erfindung liegt daher die Aufgabe zugrunde, einen Achsschenkel unter Einhaltung der an ihn gestellten Sicherheitsanforderungen gewichtsmäßig zu reduzieren und hinsichtlich seines Belastungsverhaltens zu verbessern.

Die Lösung dieser Aufgabe besteht nach der Erfindung in den Merkmalen des Anspruchs 1.

Vorteilhafte Ausgestaltungen des erfindungsgemäßen Grundgedankens bilden Gegenstand der abhängigen Ansprüche 2 bis 5.

Kernpunkt der Erfindung bildet die Maßnahme, den Achsschenkel als einteiliges Aluminiumschmiedeteil auszuführen.

Auf diese Weise wird eine ganz erhebliche Gewichtsreduzierung gegenüber einer Ausführung in Stahl realisiert. Dies bringt gleichzeitig eine Reduzierung der ungefederten Massen mit sich, wodurch sich eine Verbesserung der fahrdynamischen Eigenschaften ergibt.

Der Achsschenkel ist als einteilig geschmiedeter Bauteil gefertigt. Dieser weist eine gegenüber ihrer Dicke breitere Radlageraufnahme mit einer Durchgangsbohrung auf, die zur Eingliederung eines anschraubbaren Lagerflansches ausgebildet ist. An die Radlageraufnahme sind in zueinander versetzter stirnseitiger Lage ein konsolenartiger Führungslenkeranschluss und ein konsolenartiger Traglenkeranschluss angeformt. Seitlich ist die Bremssattelanbindung vorgesehen. Diese ist stegförmig ausgebildet. Die Position des Führungslenkeranschlusses, des Traglenkeranschlusses und der Bremssattelanbindung kann auf den jeweiligen Fahrzeugtyp und die geometrischen Einbaubedingungen angepasst werden.

An die Radlageraufnahme schliesst sich ein in seiner Längserstreckung bogenförmig verlaufender und massiv ausgebildeter Schenkelhals an. Endseitig an der freien Stirnseite des Schenkelhalses sind die Anschlüsse für die Querlenker ausgebildet. Seitlich abstehend ist ein Lenkspurhebel angeformt. Dieser weist einen sich nach aussen verringernden rechteckförmigen Mittelabschnitt auf mit einem endseitigen Lenkspurhebelanschluss.

Der Achsschenkel wird von der Radlageraufnahme zum Schenkelhals hin schlanker. Die Übergänge von der Radlageraufnahme zum Schenkelhals sowie der Übergang vom Schenkelhals zum Lenkspurhebel sind fliessend, wobei der Bauteil insgesamt über gerundete Längskantenbereiche verfügt. Kerbwirkung unter dynamischer Belastung wird hierdurch entgegengewirkt.

Insgesamt besitzt der Achsschenkel eine optimierte Steifigkeit bei reduziertem Gewicht.

Eine weitere Gewichtsoptimierung wird dadurch erreicht, dass am Übergang der Radlageraufnahme zur konvexen Seite des Schenkelhalses eine sowohl in den Schenkelhals als auch in die Radlageraufnahme auslaufenden Mulde ausgebildet ist. Damit wird eine Materialeinsparung durch Abstimmung der Bauteilkonfiguration auf die betrieblichen Belastungen erreicht.

Somit wird ein Achsschenkel geschaffen, der ein auf seine betrieblichen Anforderungen abgestimmtes Belastungsverhalten aufweist und ein hohes Mass an Gewichtseinsparung realisiert.

Um ein Radlager positionsgenau und lagesicher in der Radlageraufnahme anschrauben zu können, sind radial um die Durchgangsbohrung Ausnehmungen angeordnet. In die Ausnehmung greift der Lagerflansch des Radlagers mit seinen Widerlagerabschnitten ein. Über Schraubbolzen wird das Radlager festgelegt. Hierzu sind Gewindebohrungen vorgesehen, welche in den Boden der Ausnehmungen münden.

Die schraubbare Anbindung der Radlager erlaubt eine wesentlich vereinfachte Montage und Demontage.

In einer zweckmässigen Weiterbildung ist an der der Bremssattelanbindung gegenüberliegenden Schmalseite der Radlageraufnahme eine Konsole zur Aufnahme eines ABS-Sensors ausgebildet. Zur Montage eines Bremsabschirmbleches schliessen sich an diesen in Längserstreckung der Radlageraufnahme verlaufende Anschraubpunkte an.

Für die Praxis wird es ferner als vorteilhaft angesehen, zwischen dem Traglenkeranschluss und der Durchgangsbohrung eine muldenartige Vertiefung in der Radlageraufnahme auszuformen. Die Vertiefung erleichtert das Einführen eines Verbindungsbolzens und die Montage des Traglenkers.

Ferner ist ein ausreichender Freiheitsgrad für die Schwenkbewegung des Achsschenkels relativ zum Traglenker gewährleistet. Die Abmessungen und Ausbildung der Vertiefung werden entsprechend den betriebstechnisch zu erwartenden Belastungen unter Berücksichtigung einer angestrebten Gewichtsreduzierung ausgebildet.

Die Erfindung ist nachfolgend anhand eines in den Zeichnungen dargestellten Ausführungsbeispiels beschrieben.

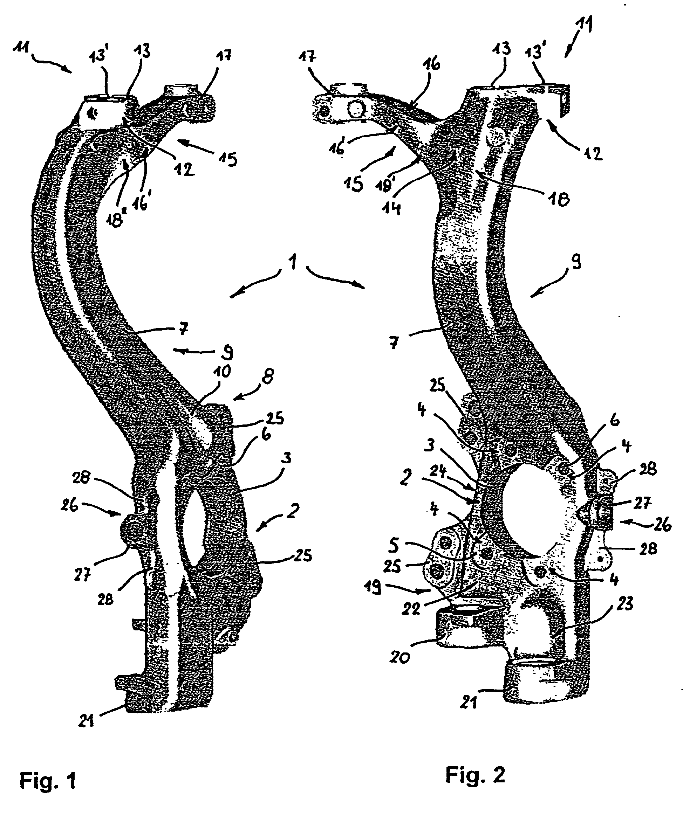

In den Figuren 1 und 2 ist ein Achsschenkel 1 in zwei perspektivischen Ansichten dargestellt.

Der Achsschenkel 1 ist als einteiliges Aluminiumschmiedeteil ausgeführt. Als Bestandteil der Radaufhängung einer Kraftfahrzeugvorderachse nimmt er die am Rad angreifenden Kräfte und Momente auf und leitet diese an die Querlenker und die Spurstange weiter. Ferner überträgt der Achsschenkel 1 die Lenkbewegung auf das Rad.

Der Achsschenkel 1 weist eine Radlageraufnahme 2 auf mit einer Durchgangsbohrung 3. Die Radlageraufnahme 2 ist gegenüber ihrer Dicke breiter ausgeführt.

In der Durchgangsbohrung 3 kann ein Radlager positioniert und über seinen Lagerflansch in der Radlageraufnahme 2 lagefixiert werden. Hierzu sind radial um die Durchgangsbohrung 3 vier Ausnehmungen 4 angeordnet. Die Ausnehmungen 4 sind zur Durchgangsbohrung 3 hin offen. Zentral im Boden 5 jeder Ausnehmung 4 mündet eine Gewindebohrung 6. Auf diese Weise kann ein Flanschlager in der Radlageraufnahme 2 schraubbar festgelegt werden. Der Einsatz eines schraubbaren Flanschlagers vereinfacht gegenüber einem eingepressten Lager die Montage und die Demontage.

An die Radlageraufnahme 2 schliesst sich ein in seiner Längserstreckung bogenförmig verlaufender Schenkelhals 7 an. Der Schenkelhals 7 besitzt einen massiven Vollquerschnitt.

Am Übergang 8 der Radlageraufnahme 2 zur konvexen Seite 9 des Schenkelhalses 7 ist eine Mulde 10 ausgebildet. Diese läuft sowohl in den Schenkelhals 7 als auch in die Radlageraufnahme 2 aus. Durch diese Formgebung wird eine gezielte Materialeinsparung erreicht unter Gewährleistung des betrieblich erforderlichen Widerstandsmoments und Steifigkeitsverhaltens.

Über den Übergang 8 verjüngt sich die Radlageraufnahme 2 zum Schenkelhals 7 hin.

An seiner freien Stirnseite 11 besitzt der Schenkelhals 7 einen Anschlussabschnitt 12, an dem zwei Anschlüsse 13, 13' für die Anbindung der Querlenker der Radaufhängung ausgebildet sind. Die Anschlüsse 13, 13' sind versetzt zueinander angeordnet. Anschluss 13' befindet sich in dem seitlich über die Kontur des Schenkelhalses 7 überstehenden Teil des Anschlussabschnitts 12. Zum Anschluss 13 verstärkt sich der Schenkelhals 7 über einen Knotenabschnitt 14.

Seitlich abstehend ist am Schenkelhals 7 ein Lenkspurhebel 15 angeformt. Dieser besitzt einen sich nach aussen verjüngenden rechteckförmigen Mittelabschnitt 16 mit ebenen Seitenflächen 16'. Endseitig ist ein Lenkspurhebelanschluss 17 angeformt.

Die Übergänge 18, 18', 18'' vom Schenkelhals 7 zum Knotenabschnitt 14 bzw. Lenkspurhebel 15 sind fliessend gerundet ausgebildet.

An der dem Schenkelhals 7 gegenüberliegenden Seite 19 der Radlageraufnahme 2 sind ein Führungslenkeranschluss 20 und ein Traglenkeranschluss 21 ausgebildet. Führungslenkeranschluss 20 und Traglenkeranschluss 21 sind versetzt zueinander angeordnet und ragen konsolenartig stirnseitig an der Flanschanschlussseite 22 der Radlageraufnahme 2 vor.

Zwischen dem Traglenkeranschluss 21 und der Durchgangsbohrung 3 ist eine muldenartige Vertiefung 23 in der Radlageraufnahme 2 ausgeformt. Die Vertiefung 23 besitzt eine halbrunde Kontur. Die Vertiefung 23 erleichtert die Einführung eines Verbindungsbolzens bei der Montage des Traglenkers und gewährleistet eine ausreichende Bewegungsfreiheit des Bolzenkopfs nach der Montage.

An einer Schmalseite 24 der Radlageraufnahme 2 befinden sich zwei stegförmige Anschlagabschnitte 25 für die Bremssattelanbindung. Auf der gegenüberliegenden Schmalseite 26 der Radlageraufnahme 2 ist eine Konsole 27 ausgebildet, die zur Aufnahme eines ABS-Sensors dient. In Längserstreckung der Radlageraufnahme 2 schliessen sich an die Konsole 27 Anschraubpunkte 28 mit Gewinde an. Diese dienen der Montage eines Bremsabschirmbleches zum Schutz gegenüber der beim Bremsen von der Bremsscheibe abgestrahlten Reibungswärme.

Der Achsschenkel 1 ist als einteilig geschmiedetes Bauteil aus Aluminium bzw. einer Aluminiumlegierung gefertigt. Hierdurch kann eine Leichtbauweise mit gegenüber einer Ausführung in Stahl erheblichen Gewichtsreduzierung realisiert werden. Dies hat eine Reduktion der ungefederten Massen zur Folge. Der Achsschenkel 1 ist durch seine Kontur in seiner Steifigkeit optimiert, und zwar bei verringertem Gewicht. Dies alles leistet einen Beitrag zur Verbesserung der fahrdynamischen Eigenschaften eines Kraftfahrzeugs.

### Bezugszeichenaufstellung

- 1 -: Achsschenkel
- 2 -: Radlageraufnahme
- 3 -: Durchgangsbohrung
- 4 -: Ausnehmung
- 5 -: Boden v. 4
- 6 -: Durchgangsbohrung f. Gewindebolzen
- 7 -: Schenkelhals
- 8 -: Übergang
- 9 -: konvexe Seite v. 7
- 10 -: Mulde
- 11 -: freie Stirnseite v. 7
- 12 -: Anschlussabschnitt
- 13 -: Anschluss
- 13'-: Anschluss
- 14 -: Knotenabschnitt
- 15 -: Lenkspurhebel
- 16 -: Mittelabschnitt
- 16'-: Seitenflächen v. 16
- 17 -: Lenkspurhebelanschluss
- 18 -: Übergang
- 18'-: Übergang
- 18''-: Übergang
- 19 -: Seite
- 20 -: Führungslenkeranschluss
- 21 -: Traglenkeranschluss
- 22 -: Flanschanschlussseite
- 23 -: Vertiefung
- 24 -: Schmalseite
- 25 -: Anschlagabschnitt
- 26 -: Schmalseite
- 27 -: Konsole
- 28 -: Anschraubpunkte f. Bremsabschirmblech

## Patentansprüche

1. Achsschenkel aus Aluminium oder einer Aluminiumlegierung für die Radaufhängung an einer Kraftfahrzeugvorderachse als einteilig geschmiedeter Bauteil, der eine gegenüber ihrer Dicke breitere, mit einer Durchgangsbohrung (3) versehene Radlageraufnahme (2) aufweist, die zur Eingliederung eines anschraubbaren Lagerflansches ausgebildet ist, wobei an die Radlageraufnahme (2) in zueinander versetzter stirnseitiger Lage ein konsolenartiger Führungslenkeranschluss (20) sowie ein konsolenartiger Traglenkeranschluss (21) und seitlich eine stegförmige Bremssattelanbindung (25) angeformt sind, und sich an die Radlageraufnahme (2) ein in seiner Längserstreckung bogenförmig verlaufender, massiv ausgebildeter Schenkelhals (7) anschliesst, an dessen freier Stirnseite (11) Anschlüsse (13, 13') für einen Querlenker ausgebildet sind, und an den ein seitlich abstehender Lenkspurhebel (15) angeformt ist, der einen sich nach aussen verjüngenden rechteckförmigen Mittelabschnitt (16) und endseitig einen Lenkspurhebelanschluss (17) aufweist.

2. Achsschenkel nach Anspruch 1, **dadurch gekennzeichnet, dass** am Übergang (8) der Radlageraufnahme (2) zur konvexen Seite (9) des Schenkelhalses (7) eine sowohl in den Schenkelhals (7) als auch in die Radlageraufnahme (2) auslaufende Mulde (10) ausgebildet ist.

3. Achsschenkel nach Anspruch 1 oder 2, **dadurch gekennzeichnet, dass** radial um die Durchgangsbohrung (3) der Radlageraufnahme (2) zur Durchgangsbohrung (3) hin offene Ausnehmungen (4) mit in den Boden (5) der Ausnehmungen (4) mündenden Gewindebohrungen (6) angeordnet sind.

4. Achsschenkel nach einem der Ansprüche 1 bis 3, **dadurch gekennzeichnet, dass** an einer Schmalseite (26) der Radlageraufnahme (2) eine Konsole (27) zur Aufnahme eines ABS-Sensors ausgebildet ist, an die sich in Längserstreckung der Radlageraufnahme (2) verlaufende Anschraubpunkte (28) für Bremsabschirmbleche anschliessen.

5. Achsschenkel nach einem der Ansprüche 1 bis 4,
**dadurch gekennzeichnet , dass** zwischen dem Traglenkeranschluss (29) und der Durchgangsbohrung (3) eine muldenartige Vertiefung (23) in der Radlageraufnahme (2) ausgeformt ist.

## Claims

1. Steering knuckle of aluminium or an aluminium alloy for the wheel suspension on a motor vehicle front axle as a component forged as one part, which has a wheel bearing socket (2), which is wider than it is thick, is provided with a through bore (3) and is designed for incorporating a bearing flange which can be bolted on, wherein a bracket-like guiding control arm attachment (20) and a bracket-like supporting control arm attachment (21) are formed on the wheel bearing socket (2) in mutually offset positions at the end face and a web-shaped brake caliper connection (25) is formed on it at the side, and the wheel bearing socket (2) is adjoined by a solidly formed stub axle neck (7) of an arcuate shape in its longitudinal extent, on the free end face (11) of which there are formed attachments (13, 13') for a transverse control arm, and on which there is formed a laterally protruding steering lever (15), which has an outwardly tapering rectangular central portion (16) and a steering lever attachment (17) at the end.

2. Steering knuckle according to Claim 1, **characterized in that** at the transition (8) of the wheel bearing socket (2) to the convex side (9) of the stub axle neck (7) there is formed a hollow (10), which runs out both into the stub axle neck (7) and into the wheel bearing socket (2).

3. Steering knuckle according to Claim 1 or 2, **characterized in that** clearances (4) which are open towards the through bore (3) and have threaded bores (6) opening out into the bottom (5) of the clearances (4) are arranged radially around the through bore (3) of the wheel bearing socket (2).

4. Steering knuckle according to one of Claims 1 to 3, **characterized in that** on a narrow side (26) of the wheel bearing socket (2) there is formed a bracket (27) for receiving an ABS sensor, which is adjoined by bolting-on points (28) running in the longitudinal extent of the wheel bearing socket (2) and intended for brake shielding plates.

5. Steering knuckle according to one of Claims 1 to 4, **characterized in that**, between the supporting control arm attachment (29) and the through bore (3), a hollow-like depression (23) is formed in the wheel bearing socket (2).

## Revendications

1. Fusée d'essieu en aluminium ou en alliage d'aluminium pour la suspension de roue sur un essieu avant de véhicule automobile sous la forme d'une pièce forgée monobloc qui présente un logement de palier de roue (2) qui est muni d'un alésage traversant (3), qui est plus large que son épaisseur et qui est conçu pour l'incorporation d'une bride de palier vissable, un raccord d'articulation de guidage (20) en forme de console ainsi qu'un raccord d'articulation de support (21) en forme de console étant formés en position frontale décalés l'un par rapport à l'autre sur le logement de palier de roue (2) et un raccord de siège de frein (25) en forme de traverse y étant formé latéralement et un col de fusée (7) de conception massive, s'étendant de façon arquée dans son extension longitudinale, se raccordant sur le logement de palier de roue (2), col de fusée sur le côté frontal libre duquel (11) sont formés des raccords (13, 13') pour un bras oscillant transversal et sur lequel est formé un levier de commande de fusée et de roue faisant saillie latéralement qui comporte un tronçon médian (16) rectangulaire s'amincissant vers l'extérieur et, sur un coté, un raccordement (17) de levier de commande de fusée et de roue.

2. Fusée d'essieu selon la revendication 1, **caractérisée en ce que**, sur la transition (8) du logement de palier de roue (2) vers le côté convexe (9) du col de fusée (7), est formée une cavité (10) s'étendant aussi bien dans le col de fusée (7) que dans le logement de palier de roue (2).

3. Fusée d'essieu selon la revendication 1 ou 2, **caractérisée en ce que**, radialement autour de l'alésage de passage (3) du logement de palier de roue (2), sont disposés des évidements ouverts (4) en direction de l'alésage de passage (3) et munis d'alésages filetés (6) débouchant dans le fond (5) des évidements (4).

4. Fusée d'essieu selon l'une des revendications 1 à 3, **caractérisée en ce que**, sur un petit côté (26) du logement de palier de roue (2), est constituée une console (27) pour recevoir un capteur ABS et sur laquelle se raccordent des points de vissage (28), s'étendant dans l'extension longitudinale du logement de palier de roue (2), pour des tôles de protection de freins.

5. Fusée d'essieu selon l'une des revendications 1 à 4, **caractérisée en ce qu'**entre le raccordement d'articulation de support (29) et l'alésage de passage (3) est formée une dépression (23) en forme de cavité dans le logement de palier de roue (2).
